Europäisches Patentamt

European Patent Office

Office européen des brevets

(19)

(11) Numéro de publication: **0 113 602**
**A1**

# (12) DEMANDE DE BREVET EUROPEEN

(21) Numéro de dépôt: **83402188.3**

(22) Date de dépôt: **10.11.83**

(51) Int. Cl.³: **F 24 J 3/02**

(30) Priorité: **18.11.82 FR 8219326**

(43) Date de publication de la demande:
**18.07.84 Bulletin 84/29**

(84) Etats contractants désignés:
**DE GB IT**

(71) Demandeur: **COMMUNAUTE EUROPEENNE DE L'ENERGIE ATOMIQUE (EURATOM)**
**Bâtiment Jean Monnet Plateau du Kirchberg Boîte Postale 1907**
**L-1019 Luxembourg(LU)**

(71) Demandeur: **CENTRE NATIONAL DE LA RECHERCHE SCIENTIFIQUE (C.N.R.S.)**
**15, Quai Anatole France**
**F-75700 Paris(FR)**

(72) Inventeur: **Armas, Benigno**
**Maison Solaire no 2**
**F-66120 Font Romeu Odeillo(FR)**

(72) Inventeur: **Combescure, Christian**
**Rue des Casteillets**
**F-66340 Osseja(FR)**

(72) Inventeur: **Etievant, Claude**
**44, rue Saint Charles**
**F-78000 Versailles(FR)**

(72) Inventeur: **Fontaine, Guy**
**Via Monte Santo No 13**
**I-21023 Besozzo (Varese)(IT)**

(72) Inventeur: **Olalde, Gabriel**
**Avenue des Lupins**
**F-66210 Super-Bolquere(FR)**

(72) Inventeur: **Vialaron, André**
**11, rue Darquié**
**F-31000 Toulouse(FR)**

(74) Mandataire: **Mongrédien, André et al,**
**c/o BREVATOME 25, rue de Ponthieu**
**F-75008 Paris(FR)**

(54) **Dispositif d'absorption du rayonnement solaire concentré et procédé de réalisation d'un tel dispositif.**

(57) La présente invention a pour objet un dispositif d'absorption progressive et contrôlée du rayonnement solaire concentré.

Ce dispositif est constitué par un capteur solaire (1) à l'intérieur duquel des cloisons (2) définissent un réseau de canaux parallèles (4), les cloisons (2) étant recouvertes d'un dépôt (8) dont l'épaisseur augmente au fur et à mesure qu'on s'éloigne de la face (6) exposée au rayonnement afin que la capacité d'absorption du rayonnement soit d'autant plus grande que le point considéré est plus éloigné de ladite face exposée (6).

Application à la conversion thermodynamique à haute température.

FIG. 1

La présente invention se rapporte aux dispositifs d'absorption du rayonnement solaire concentré et a plus spécialement pour objet un dispositif à structure poreuse permettant de diminuer les pertes calorifiques et d'améliorer le rendement des échanges thermiques.

La production de chaleur à haute température au moyen de l'énergie solaire concentrée se développe à l'heure actuelle dans deux domaines principaux qui sont la conversion thermodynamique et la thermochimie. Ces deux applications utilisent le chauffage des gaz à haute température à l'aide de l'énergie solaire.

Pour la conversion thermodynamique à haute température (800 à 1000°C), le fluide caloporteur ne peut être qu'un gaz pour des questions de stabilité aux températures de fonctionnement. De plus, les cycles à gaz présentent de meilleurs rendements de conversion que les cycles à liquides. En ce qui concerne la thermochimie a haute température, celle-ci présente de nombreuses applications telles que la production de molécules à haute valeur énergétique pour le développement des combustibles liquides ou la thermolyse directe de l'eau ou du dioxyde de carbone pour produire de l'hydrogène ou du monoxyde de carbone.

Pour toutes ces applications, on a mis au point des capteurs ou récepteurs solaires dans lesquels est effectué l'échange thermique. Différents types de récepteurs sont déjà connus et utilisés, par exemple les récepteurs métalliques fonctionnant sous pression et à des températures de l'ordre de 300 à 800°C. Le domaine d'application de ces appareils est principalement la conversion thermodynamique. Cependant, ces récepteurs présentent l'inconvénient de ne pas pouvoir travailler à très haute température et ils sont souvent lourds car ils doivent offrir une surface d'échange gaz-solide importante, ce qui entraîne la présence d'éléments tels que des ailettes, d'où des

B 7749    JR

pertes de charges accrues, ainsi qu'un poids et une inertie importants. D'autres dispositifs utilisent des matériaux réfractaires, ce qui permet d'augmenter le niveau de température auquel le récepteur fonctionne. Les conditions de travail de ces capteurs ne sont limitées que par les caractéristiques thermophysiques du réfractaire utilisé. On a également conçu des récepteurs constitués par des dômes sphériques réfractaires associés à des jets de gaz ou des récepteurs réalisés à partir d'un conduit réfractaire en forme de serpentin.

Afin d'améliorer le rendement de tels appareils, certains chercheurs ont mis au point des récepteurs utilisant des milieux divisés, c'est-à-dire des matériaux à structure poreuse ou alvéolaire qui présentent deux avantages importants. Tout d'abord, ils servent d'absorbeurs solaires dans la mesure où les microporosités de leur structure géométrique sont d'excellents pièges pour le rayonnement. D'autre part, ce sont d'excellents échangeurs de chaleur car ils offrent une surface d'échange solide-gaz très importante. D'autre part, leur poids est faible par rapport à leur surface d'échange, ce qui leur permet d'être utilisés aisément dans les concentrateurs individuels paraboliques. Cependant, on a remarqué qu'il y avait un gradient thermique important dans la masse de ces appareils, ce qui favorise les pertes radiatives sur la face exposée au flux solaire. Ce phénomène est dû au fait que le rayonnement ne pénètre pas à l'intérieur de la matrice : il est presque entièrement absorbé au voisinage de la face exposée.

La présente invention a justement pour but d'éliminer ces inconvénients en proposant un récepteur solaire qui élimine pratiquement les pertes radiatives sur la face exposée au flux solaire et permet à celui-ci d'être mieux réparti dans la masse du capteur.

Selon la principale caractéristique du dispositif objet de l'invention, celui-ci, du type comportant au moins une pièce dont une face est exposée au rayonnement, ladite pièce ayant une structure poreuse ou alvéolaire, se caractérise en ce que les parois des pores ou des alvéoles ont une capacité d'absorption du rayonnement d'autant plus grande que le point considéré est plus éloigné de ladite face exposée au rayonnement.

Dans un mode de réalisation préféré, les parois des pores ou des alvéoles sont recouvertes d'une couche d'un matériau réfractaire de propriétés optiques appropriées dont l'épaisseur est d'autant plus grande que le point considéré est plus éloigné de la face exposée au rayonnement. L'expression "propriétés optiques" utilisée ici désigne essentiellement les propriétés d'absorption vis-à-vis du rayonnement solaire : suivant l'usage auquel est destiné le capteur, l'homme de l'art choisira un matériau plus ou moins absorbant pour réaliser le dépôt.

L'invention s'applique plus particulièrement au cas où les parois des pores ou des alvéoles définissent un réseau de canaux parallèles, les génératrices des canaux pouvant être soit parallèles, soit perpendiculaires à la direction du rayonnement solaire concentré.

Avantageusement, les parois des pores ou alvéoles sont réalisées en un matériau réfractaire comme la silice, le dépôt étant un produit réfractaire à base de silicium comme les nitrures ou les halogènures de silicium, ou tout autre matériau compatible avec l'atmosphère gazeuse utilisée.

Enfin, l'invention a encore pour objet un procédé de réalisation d'un tel dispositif. Selon la principale caractéristique de ce procédé, celui-ci comporte les étapes suivantes :

- on place une pièce ayant une structure poreuse ou alvéolaire dans une enceinte étanche,

B 7749   JR

- on abaisse la pression dans ladite enceinte,

- on met en route des moyens de chauffage, ceux-ci étant réglés de manière à obtenir un gradient de température le long de la pièce, et

- on introduit dans l'enceinte le ou les gaz réactifs servant à réaliser le dépôt.

L'invention apparaîtra mieux à la lecture de la description qui va suivre, donnée à titre d'exemple purement illustratif et nullement limitatif, en référence aux dessins annexés, dans lesquels :

- la figure 1 est une vue schématique en perspective et partiellement en coupe d'un premier mode de réalisation du dispositif objet de l'invention ;

- la figure 2 est une vue semblable à la figure 1 représentant un deuxième mode de réalisation de ce dispositif, et

- la figure 3 est une vue schématique illustrant un procédé de fabrication du dispositif objet de l'invention.

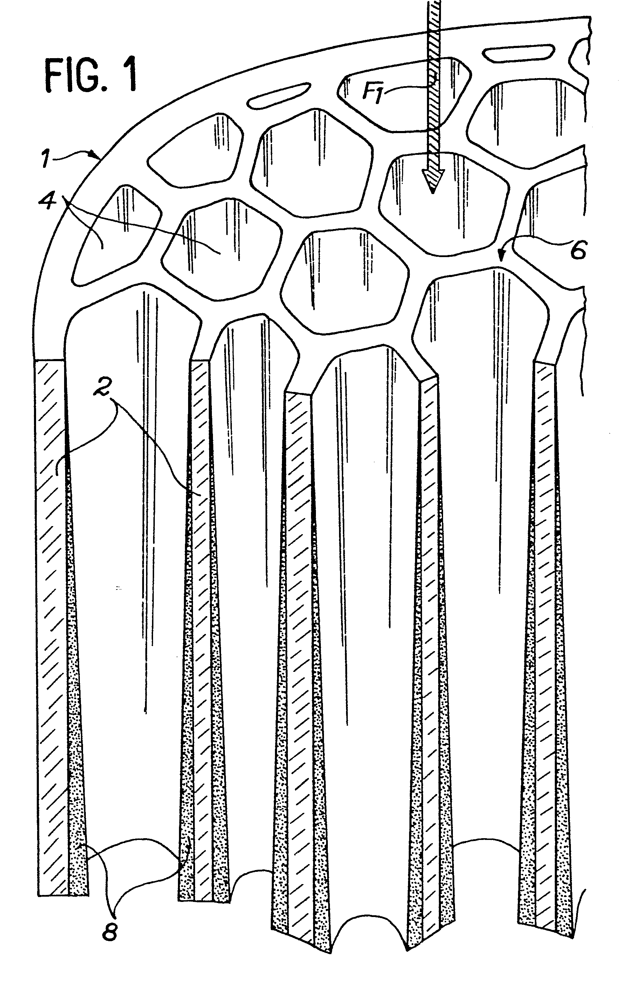

Sur la figure 1, on voit que le dispositif, portant la référence générale 1, a en gros la forme d'un cylindre à l'intérieur duquel un certain nombre de parois ou cloisons 2 définissent des canaux 4, ceux-ci ayant une section polygonale et leur direction générale étant sensiblement parallèle aux génératrices du cylindre. La disposition est telle que la face supérieure 6 du capteur est directement exposée au rayonnement solaire concentré, celui-ci étant symbolisé par la flèche F1. On voit encore sur la figure que la paroi interne des cloisons 2 est recouverte d'un dépôt 8 dont l'épaisseur augmente au fur et à mesure qu'on s'éloigne de la face supérieure 6.

A titre d'essai, on a réalisé un tel capteur dans lequel les parois 2 étaient en silice transparente et sur lesquelles on a effectué un dépôt

B 7749 JR

d'épaisseur variable de nitrure de silicium. En effet, on a remarqué que le fait de déposer une couche d'épaisseur variable d'un matériau réfractaire sur les cloisons 2 des canaux 4 permet de modifier les propriétés thermoradiatives de la surface des cloisons, la capacité d'absorption étant d'autant plus importante que l'épaisseur du dépôt est plus grande. C'est pourquoi on fait en sorte que l'épaisseur de celui-ci augmente au fur et à mesure qu'on s'éloigne de la face exposée au rayonnement solaire : ainsi, la capacité d'absorption étant plus importante à l'intérieur du capteur qu'au voisinage de la face exposée, l'énergie solaire est absorbée dans toute la masse du capteur et non pas uniquement au voisinage de cette face. Ceci permet évidemment de diminuer les pertes thermiques sur la face exposée et de réaliser un profil thermique déterminé dans la masse du capteur. On améliore ainsi les performances énergétiques du dispositif puisque le chauffage du gaz circulant dans les canaux 4 est effectué sur toute la longueur de ces derniers. D'autre part, le fait de déposer un matériau réfractaire sur les cloisons 2 permet de garder intactes les qualités de ce dernier tandis qu'un traitement dans la masse modifie les qualités réfractaires du matériau de base (par exemple la conductivité thermique, la tenue en température, la résistance aux chocs thermiques) dans un sens défavorable.

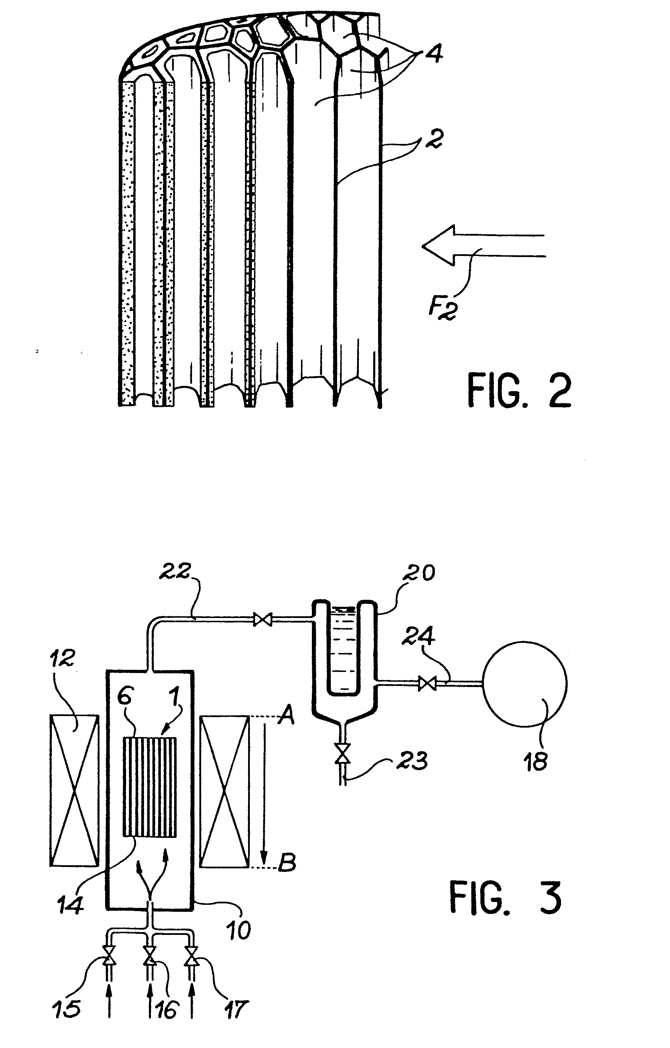

La figure 2 illustre un dispositif semblable à celui de la figure 1 avec les canaux 4 séparés par les cloisons 2, mais, dans ce cas, la direction du rayonnement solaire, symbolisée par la flèche $F_2$, est perpendiculaire à la direction générale des canaux. C'est pourquoi, dans le cas particulier de la figure 2, l'épaisseur du dépôt sur une paroi donnée est constante, mais une cloison plus éloignée qu'une autre de

B 7749   JR

la face exposée est recouverte d'un dépôt plus épais. Comme dans le cas de la figure 1, le rayonnement est absorbé dans toute la masse du capteur, ce qui diminue les pertes radiatives sur la face exposée et favorise les échanges thermiques dans toute la masse du dispositif.

L'invention a encore pour objet un procédé de réalisation d'un dispositif tel que celui des figures 1 et 2. Le traitement de surface des parois est effectué par dépôt chimique en phase gazeuse sous pression réduite : en effet, ce type de traitement permet d'une part d'obtenir des revêtements très résistants à haute température et, d'autre part, de contrôler l'épaisseur du dépôt tout au long de la matrice alvéolaire.

Sur la figure 3, on voit que l'on place la matrice alvéolaire 1 semblable à celle de la figure 1, mais sans le dépôt 8, à l'intérieur d'une enceinte étanche 10, elle-même disposée à l'intérieur d'un four équipé de moyens de chauffage 12 permettant d'obtenir un gradient thermique déterminé à l'intérieur de l'enceinte 10. On peut utiliser n'importe quel moyen de chauffage connu en soi, par exemple : résistance électrique, induction à haute fréquence avec un couplage direct sur l'échantillon si celui-ci est conducteur ou par l'intermédiaire d'un suscepteur en graphite. La réaction est effectuée sous pression réduite afin de faciliter le passage des gaz qui doivent réagir entre eux pour former le dépôt le long des canaux 4, qui sont généralement très étroits. Le fait de créer un gradient thermique dans l'enceinte 10 permet de contrôler l'épaisseur du dépôt le long de la pièce 1. En effet, la vitesse de dépôt est fonction de plusieurs paramètres et notamment de la température, cette vitesse augmentant avec la température pour rester constante au-delà d'une température limite : si l'on maintient la pièce 1 pendant une durée déterminée dans un gradient thermique, l'épaisseur obtenue est plus importante dans les zones exposées aux températures les plus fortes. Par exemple, dans le cas de la figure 3, si la température augmente lorsqu'on passe du niveau supérieur A au niveau inférieur B, on obtient un capteur comme celui de la figure 1 où l'épaisseur du dépôt est plus importante au voisinage de la face inférieure 14 qu'au voisinage de la face supérieure 6. Bien entendu, la température maximale doit rester inférieure à la valeur limite au-delà de laquelle la vitesse de dépôt est constante. L'homme de l'art choisira évidemment les températures et la durée de réaction convenables pour obtenir le dépôt d'épaisseur voulue.

On voit encore sur la figure trois arrivées de gaz 15, 16 et 17 pour l'introduction des gaz nécessaires à la réaction tandis qu'une pompe 18 permet de diminuer la pression à l'intérieur de l'enceinte 10. Entre la pompe 18 et cette dernière est interposé un piège à azote liquide 20 dont le fonctionnement est le suivant : les gaz sortant de l'enceinte 10 par une canalisation 22 arrivent au contact de l'azote liquide où ils se refroidissent, se liquéfient et sont évacués par une conduite 23, tandis que les vapeurs résiduelles sont absorbées par la pompe 18 à travers la canalisation 24.

A titre d'essai, on a réalisé un dispositif semblable à celui représenté à la figure 1 à partir d'une matrice alvéolaire en silice transparente sur laquelle on a déposé une couche d'épaisseur variable de nitrure de silicium. L'échantillon traité était un prisme de 80 x 25 x 10 mm, l'axe des canaux étant parallèle aux arêtes les plus longues. Pour réaliser le

B 7749   JR

nitrure de silicium, on a introduit dans l'enceinte 10 d'une part du silane $SiH_4$ comme source gazeuse de silicium et d'autre part de l'ammoniac $NH_3$ comme source d'azote atomique, car l'ammoniac se décompose plus facilement que l'azote pur. On peut éventuellement utiliser des halogénures de silicium, par exemple du chlorure $SiCl_4$ ou du bromure $SiBr_4$, la réduction de ces derniers étant favorisée par un flux d'hydrogène : c'est pourquoi on a prévu les trois arrivées de gaz 15, 16 et 17 de la figure 3. Dans l'exemple de réalisation décrit ici, l'échantillon a été soumis à un gradient de température compris entre 600 et 1100°C, la durée de traitement étant de l'ordre de dix minutes et la pression totale dans l'enceinte 10 ayant été maintenue à 133 Pa.

Ainsi, le dispositif objet de l'invention présente de nombreux avantages dont le principal est de permettre une absorption progresive et contrôlée du rayonnement solaire concentré, cette absorption étant répartie dans toute la masse du capteur, ce qui évite les pertes radiatives au niveau de la surface exposée au rayonnement. D'autre part, il est plus facile d'obtenir un profil de température axial ou radial bien défini en fonction du processus à accomplir, ce qui permet d'améliorer les performances énergétiques du récepteur. De plus, le fait de réaliser un dépôt au lieu de traiter dans la masse le matériau constituant la structure alvéolaire permet de garder intactes les qualités du matériau de base, notamment les qualités mécaniques et thermiques. Enfin, on peut travailler à très haute température, le niveau de celle-ci n'étant limité que par le choix des matériaux réfractaires utilisés.

Enfin, il est bien entendu que l'invention ne se limite pas aux seuls modes de réalisation qui viennent d'être décrits mais qu'on peut envisager des variantes sans sortir pour autant du cadre de l'invention. C'est ainsi que l'homme de l'art pourra utiliser d'autres matériaux pour la matrice alvéolaire et le matériau déposé et faire varier l'épaisseur du dépôt en fonction de chaque application envisagée.

## REVENDICATIONS

1. Dispositif d'absorption du rayonnement solaire concentré, du type comportant au moins une pièce (1) dont une face (6) est exposée au rayonnement, ladite pièce (1) ayant une structure poreuse ou alvéolaire, caractérisé en ce que les parois (2) des pores ou des alvéoles (4) ont une capacité d'absorption du rayonnement d'autant plus grande que le point considéré est plus élogné de ladite face exposée au rayonnement (6).

2. Dispositif selon la revendication 1, caractérisé en ce que les parois (2) des pores ou alvéoles (4) sont recouvertes d'une couche d'un matériau réfractaire (8) dont l'épaisseur est d'autant plus grande que le point considéré est plus éloigné de la face exposée au rayonnement (6).

3. Dispositif selon la revendication 1, caractérisé en ce que lesdites parois(2) sont disposées de manière à définir un réseau de canaux parallèles (4).

4. Dispositif selon la revendication 3, caractérisé en ce que les parois (2) sont disposées de telle sorte que les génératrices des canaux (4) soient parallèles à la direction du rayonnement solaire concentré.

5. Dispositif selon la revendication 3, caractérisé en ce que les parois (2) sont disposées de telle sorte que les génératrices des canaux (4) soient perpendiculaires à la direction du rayonnement solaire concentré.

6. Dispositif selon la revendication 1, caractérisé en ce que les parois (2) des pores ou alvéoles (4) sont en silice.

7. Dispositif selon la revendication 2, ca-

B 7749   JR

ractérisé en ce que ladite couche réfractaire (8) est une couche de nitrure de silicium.

8. Procédé de réalisation d'un dispositif selon la revendication 2, caractérisé en ce qu'il comprend les étapes suivantes :

- on place une pièce (1) ayant une structure poreuse ou alvéolaire dans une enceinte étanche (10),
- on abaisse la pression dans ladite enceinte (10),
- on met en route des moyens de chauffage (12), ceux-ci étant réglés de manière à obtenir un gradient de température le long de la pièce (1), et
- on introduit dans l'enceinte (10) le ou les gaz réactifs servant à réaliser le dépôt.

B 7749   JR

0113602

FIG. 1

FIG. 2

FIG. 3

Office européen
des brevets

**RAPPORT DE RECHERCHE EUROPEENNE**

EP 83 40 2188

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 047 517 (ARNBERG)<br>* Colonne 3, ligne 55 - colonne 5, ligne 29; figures 4,5 * | 1 | F 24 J 3/02 |
| | --- | | |
| A | DE-A-2 538 300 (DORNIER)<br>* En entier * | 6,7 | |
| | --- | | |
| A | US-A-3 160 517 (JENKIN)<br>* En entier * | 8 | |
| | --- | | |
| A | US-A-4 121 564 (SCHWARTZ) | | |
| | --- | | |
| A | FR-A-2 482 269 (ANVAR) | | |
| | ----- | | |

DOMAINES TECHNIQUES RECHERCHES (Int. Cl. ³)

F 24 J
C 23 C

Le présent rapport de recherche a été établi pour toutes les revendications

| Lieu de la recherche<br>LA HAYE | Date d'achèvement de la recherche<br>23-02-1984 | Examinateur<br>PERROTTA A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82